# EUROPEAN PATENT APPLICATION

(11) **EP 4 201 889 A1**
(43) Date of publication of application: **28.06.2023**
(21) Application number: 21886476.7
(22) Date of filing: 11.06.2021
(51) Int. Cl.: C01G 53/00, H01M 4/525, H01M 4/505, H01M 4/62, H01M 4/36

(54) **METHOD FOR MANUFACTURING POSITIVE ELECTRODE ACTIVE MATERIAL FOR LITHIUM SECONDARY BATTERY**

(30) Priority: 27.10.2020 KR 20200140546
(71) Applicant: ECOPRO BM CO., LTD., Cheongju-si, Chungcheongbuk-do 28116 (KR)
(72) Inventor: JEON, Jae Woo, Cheongju-si, Chungcheongbuk-do 28116 (KR); SUH, Jun Won, Cheongju-si, Chungcheongbuk-do 28116 (KR); YUN, Jin Kyeong, Cheongju-si, Chungcheongbuk-do 28116 (KR); SON, Jin Oh, Cheongju-si, Chungcheongbuk-do 28116 (KR); YUN, Mi Hye, Cheongju-si, Chungcheongbuk-do 28116 (KR); CHOI, Moon Ho, Cheongju-si, Chungcheongbuk-do 28116 (KR); NOH, Hyung Joo, Cheongju-si, Chungcheongbuk-do 28116 (KR); NA, Su Bin, Cheongju-si, Chungcheongbuk-do 28116 (KR); KIM, Ju Chul, Cheongju-si, Chungcheongbuk-do 28116 (KR)
(74) Representative: BCKIP Part mbB
(86) International application number: PCT/KR2021/007315
(87) International publication number: WO 2022/092477

(57) **Abstract**

The present invention relates to a method of preparing a positive electrode active material for a lithium secondary battery, and more particularly, to a method of preparing a positive electrode active material for a lithium secondary battery, which is able to improve electrochemical properties and stability by controlling the specific surface area of a positive electrode active material.

## Description

### BACKGROUND

### 1. Field of the Invention

The present invention relates to a method of preparing a positive electrode active material for a lithium secondary battery, and more particularly, to a method of preparing a positive electrode active material for a lithium secondary battery, which is capable of improving electrochemical properties and stability by controlling the specific surface area of a positive electrode active material.

### 2. Discussion of Related Art

Batteries store electrical power by using materials facilitating an electrochemical reaction at a positive electrode and a negative electrode. As a representative example of such batteries, there is a lithium secondary battery storing electrical energy by means of a difference in chemical potential when lithium ions are intercalated/deintercalated into/from a positive electrode and a negative electrode.

The lithium secondary battery uses materials enabling reversible
intercalation/deintercalation of lithium ions as positive electrode and negative electrode active materials, and is manufactured by charging a liquid organic electrolyte or a polymer electrolyte between the positive electrode and the negative electrode.

As a positive electrode active material of the lithium secondary battery, a lithium composite oxide may be used, and for example, composite oxides such as LiCoO₂, LiMn₂O₄, LiNiO₂, and LiMnO₂ are being studied.

Among the positive electrode active materials, LiCoO₂ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such cation mixing, a large amount of Li by-products is generated. Since most of the Li by-products consist of LiOH and Li₂CO₃, they may cause gelation in preparation of a positive electrode paste or cause gas generation according to repeated charge/discharge after the manufacture of an electrode. Residual Li₂CO₃ not only increases cell swelling to reduce the number of cycles, but also causes the swelling of a battery.

To compensate for these shortcomings, a demand for a high-Ni positive electrode active material with a Ni content of 50% or more as a positive electrode active material for a secondary battery has begun to increase. However, this high-Ni positive electrode active material has a high capacity, and the increasing Ni content in the positive electrode active material causes structural instability by Li/Ni cation mixing. Due to the structural instability of the positive electrode active material, a lithium secondary battery may abruptly deteriorate not only a high temperature but also room temperature.

Therefore, it is necessary to develop a positive electrode active material to compensate for the problems of the high-Ni positive electrode active material.

### SUMMARY OF THE INVENTION

In the lithium secondary battery market, while the growth of lithium secondary batteries for electric vehicles is driving the market, the demand for a positive electrode active material used in a lithium secondary battery is also constantly changing.

For example, conventionally, lithium secondary batteries using LFP have been mainly used in terms of securing safety, but recently, the use of a nickel-based lithium composite oxide, which has a higher energy capacity per weight than LFP, is increasing.

In addition, recently, to realize the high capacity of a nickel-based lithium composite oxide, attempts have been made to use a high-Ni positive electrode active material having an increased Ni content in the lithium composite oxide. However, since a high-Ni positive electrode active material includes an excess of Li by-products or is structurally unstable, research is being conducted to mitigate the above shortcomings using a dopant or coating.

The surface of the positive electrode active material is a region in which a side reaction with an electrolyte during the charging/discharging and/or storage of a lithium secondary battery may occur, and as the surface area of the positive electrode active material (e.g., expressed as an indicator, such as a BET specific surface area) increases, the possibility of side reactions increases. Therefore, the crystal structure in the surface of the positive electrode active material may undergo phase transformation (e.g., layered structure → rock salt structure). The phase transformation of the crystal structure in the surface of the positive electrode active material is pointed out as one of the causes of reducing the lifespan of the lithium secondary battery.

Accordingly, the present invention is directed to providing a method of preparing a positive electrode active material for a lithium secondary battery, which is capable of improving electrochemical properties and stability of the positive electrode active material by controlling the specific surface area thereof.

In addition, the present invention is directed to providing a positive electrode including a positive electrode active material prepared according to the method defined herein, and a lithium secondary battery using the same.

One aspect of the present invention provides a method of preparing a positive electrode active material for a lithium secondary battery, which includes: (a) preparing a first mixture by mixing a nickel composite precursor, a lithium compound and a first additive, (b) obtaining a first lithium composite oxide through first thermal treatment of the first mixture, (c) preparing a second mixture by mixing the first lithium composite oxide and a second additive, and (d) obtaining a second lithium composite oxide through second thermal treatment of the second mixture.

Here, the first additive and the second additive may each independently include at least one selected from Al₂O₃, Al(OH)₃, AlPO₄, Al(PO₃)₃, WO₃, Mg(OH)₂, NH₄F, TiO₂, H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆, and (C₃H₇O₃)B, and the first additive and the second additive may be the same or different.

Meanwhile, the second thermal treatment temperature may be adjusted to be lower than first thermal treatment temperature, thereby preventing the specific surface area of the second lithium composite oxide obtained in (d) from excessively increasing.

In addition, a smooth reaction between the first lithium composite oxide and the second additive may be induced by performing a subsequent step after removing the first additive remaining in the first lithium composite oxide by reacting the first lithium composite oxide and a washing solution before (c), and therefore, it is possible to control the specific surface area of the lithium composite oxide intended herein.

The second lithium composite oxide obtained by the above-described preparation method may be represented by Formula 1 below.

[Formula 1] Li_{w}Ni_{1-(x+y+z)}CoₓM1_{y}M2_{z}O₂

(Here,
M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
0.5≤w≤1.5, 0≤x≤0.50, 0<y≤0.20, and 0≤z≤0.20.)

Another aspect of the present invention provides a positive electrode including a positive electrode active material prepared according to the above-described preparation method.

Still another aspect of the present invention provides a lithium secondary battery using the positive electrode.

According to the present invention, in a process of preparing a positive electrode active material, as the BET specific surface area of a first lithium composite oxide obtained through first thermal treatment after mixing a nickel composite precursor and a first additive is controlled to be present in a predetermined range compared to the nickel composite precursor, and the BET specific surface area of a second lithium composite oxide obtained through second thermal treatment after mixing the first lithium composite oxide and a second additive is controlled to be present in a predetermined range compared to the first lithium composite oxide, even when a specific metal element is doped into the positive electrode active material or a coating layer is introduced onto the surface of the positive electrode active material, it is possible to prevent the electrochemical properties and/or stability of the positive electrode active material from being degraded.

In other words, according to the present invention, it is possible to ensure a sufficient doping amount of a specific metal element in the positive electrode active material or a sufficient coating amount on the surface of the positive electrode active material, and also prevent the specific surface area of a lithium composite oxide constituting the positive electrode active material from unnecessarily increasing.

### DETAILED DESCRIPTION OF EXEMPLARY EMBODIMENTS

Hereinafter, a method of preparing a positive electrode active material for a lithium secondary battery according to the present invention, a positive electrode including a positive electrode active material prepared according to the preparation method, and a lithium secondary battery using the positive electrode will be described in further detail.

### Method of preparing positive electrode active material for lithium secondary battery

According to one aspect of the present invention, a method of preparing a positive electrode active material for a lithium secondary battery, which includes (a) preparing a first mixture by mixing a nickel composite precursor, a lithium compound and a first additive, (b) obtaining a first lithium composite oxide through first thermal treatment of the first mixture, (c) preparing a second mixture by mixing the first lithium composite oxide and a second additive, and (d) obtaining a second lithium composite oxide through second thermal treatment of the second mixture, is provided.

Step (a) is for providing a first mixture by mixing a nickel composite precursor, a lithium compound, and a first additive.

The nickel composite precursor used in (a), as a precursor material of a lithium composite oxide used as a positive electrode active material, is a nickel composite hydroxide and/or a nickel composite oxide, and may form a lithium composite oxide by the reaction with a lithium compound as an Li raw material.

The nickel composite precursor may include at least nickel and cobalt, and may further include a metal element depending on the composition of a lithium composite oxide.

For example, the nickel composite precursor may be a nickel-cobalt-manganese composite hydroxide or composite oxide, including nickel, cobalt and manganese, a nickel-cobalt-aluminum composite hydroxide or composite oxide, including nickel, cobalt and aluminum, or a nickel-cobalt-manganese-aluminum composite hydroxide or composite oxide, including nickel, cobalt, manganese and aluminum. In addition, a different type of metal element may be doped into the above-described nickel-cobalt-(manganese/aluminum) composite hydroxide or composite oxide.

The different type of metal element may be at least one selected from B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd, and Cu.

As a lithium compound that can form a lithium composite oxide by the reaction with the nickel composite precursor, lithium hydroxide, lithium carbonate, lithium nitrate, or lithium acetate may be used. The lithium compound preferably has a ratio (Li/Metal) of a lithium atom number (Li) to the total atom number (Metal) of a metal element, except lithium, in the first mixture of 0.95 to 1.10.

The first additive used in (a) may include at least one selected from Al₂O₃, Al(OH)₃, AlPO₄, Al(PO₃)₃, WO₃, Mg(OH)₂, NH₄F, TiO₂, H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆, and (C₃H₇O₃)B. In addition, the first additive may be provided as a mixture of at least one selected from Al₂O₃, Al(OH)₃, AlPO₄, Al(PO₃)₃, WO₃, Mg(OH)₂ NH₄F and TiO₂, and at least one selected from H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆ and (C₃H₇O₃)B.

In (a), the first additive is preferably mixed to be 0.5 to 1.0 mol% with respect to the nickel composite precursor. When the first additive is added in an amount less than 0.5 mol% with respect to the nickel composite precursor, the specific surface area increasing effect of the first lithium composite oxide obtained in the first thermal treatment step of (b), which will be described below, may be insignificant. In this case, since the specific surface area of a second lithium composite oxide (positive electrode active material), which is the final product, is excessively reduced, it is difficult to expect a sufficient effect of improving the electrochemical properties of the positive electrode active material.

On the other hand, when the first additive is added in an amount exceeding 1.0 mol% with respect to the nickel composite precursor, there is a risk of an excessive increase in the specific surface area of the first lithium composite oxide obtained in the first thermal treatment step of (b), which will be described below. In this case, since the specific surface area of a second lithium composite oxide (positive electrode active material), which is the final product, increases, there is a risk of a decrease in the stability of the positive electrode active material.

Subsequently, in (b), a first lithium composite oxide is obtained through first thermal treatment of the first mixture prepared in (a).

The first thermal treatment of (b) may be performed for 5 to 10 hours by increasing the temperature until 600 to 800 °C at 2 °C per minute while maintaining an O₂ atmosphere in a calcination furnace. When the temperature of the first thermal treatment is less than 600 °C, as the calcination of the first mixture progresses insufficiently, the crystal growth of the first lithium composite oxide may be insufficient. On the other hand, when the temperature of the first thermal treatment exceeds 800 °C, thermal decomposition of the first lithium composite oxide may occur.

The first lithium composite oxide obtained in (b) may be represented by Formula 1-1 below.

[Formula 1-1] Li_{w}Ni_{1-(x+y+z)}CoₓM1_{y}M2_{z}O₂

(Here,
M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
0.5≤w≤1.5, 0≤x≤0.50, 0<y≤0.20, and 0≤z≤0.20.)

The composition of the first lithium composite oxide may be the same as that of the second lithium composite oxide, which will be described below, but there may be a difference in the contents of some metal elements.

In order for the first lithium composite oxide represented by Formula 1-1 to include the nickel composite precursor, the lithium compound, and a different type of metal element other than the metal element contained in the first additive, it is necessary to further include a raw material containing the different metal element in the first mixture in (a).

As a different type of metal element, other than the metal elements contained in the nickel composite precursor, the lithium compound and the first additive, is doped into the crystal lattice of the first lithium composite oxide, the first lithium composite oxide may contribute to stabilization of the crystal structure of the first lithium composite oxide, or an improvement in the electrochemical properties of the first lithium composite oxide.

In addition, the present invention relates to a method of preparing a positive electrode active material for a lithium secondary battery, which can improve electrochemical properties and stability by controlling the specific surface area of the positive electrode active material, and based on the above-described technical problem of the present invention, a BET specific surface area of the first lithium composite oxide obtained in (b) is preferably set to be 1.5 to 1.8 m²/g.

The BET specific surface area of the first lithium composite oxide is an indicator calculated from the adoption amount of nitrogen gas under a liquid nitrogen temperature using a gas adsorption method and a specific surface area measurement system.

The BET specific surface area of the first lithium composite oxide may depend on a BET specific surface area of the nickel composite precursor, but in (b), the BET specific surface area of the first lithium composite oxide may increase compared to the nickel composite precursor due to the first additive in the first mixture.

Accordingly, (b) may be performed such that a ratio (s2/s1) of the BET specific surface area (s2) of the first lithium composite oxide to the BET specific surface area (s1) of the nickel composite precursor exceeds 0.098.

When the ratio (s2/s1) of the BET specific surface area (s2) of the first lithium composite oxide to the BET specific surface area (s1) of the nickel composite precursor is 0.098 or less, the specific surface area of a second lithium composite oxide (positive electrode active material), which is the final product obtained through a subsequent process, may excessively decrease. In this case, due to the excessively small specific surface area of the second lithium composite oxide, it may be difficult for the positive electrode active material including the same to exhibit sufficient electrochemical properties.

On the other hand, when ratio (s2/s1) of the BET specific surface area (s2) of the first lithium composite oxide to the BET specific surface area (s1) of the nickel composite precursor is 0.137 or more, despite the second thermal treatment in (d), the possibility that the specific surface area of a second lithium composite oxide, which is the final product, exceeds 1.2 m²/g, increases. That is, as the BET specific surface area of the first lithium composite oxide obtained in (b) is not controlled to a predetermined ratio compared to the nickel composite precursor, it may also be difficult for the BET specific surface area of the second lithium composite oxide to be within the intended range. Likewise, the second lithium composite oxide having an excessively large BET specific surface area may act as a cause of reducing the stability of the positive electrode active material.

In addition, before (c), disintegration, distribution, iron removal and/or washing may be performed on the first lithium composite oxide obtained in (b).

The first additive remaining in the first lithium composite oxide may be removed by the reaction between the first lithium composite oxide obtained in (b) and a washing solution and then a subsequent step is performed, thereby inducing a smooth reaction between the first lithium composite oxide and the second additive.

Before (c), when (b-1) mixing at least one metal element-containing raw material with the first lithium composite oxide and thermally treating the resulting mixture at a temperature range of 600 to 800 °C are further performed, the washing process is preferably performed after (b-1).

The first additive and the at least one metal element-containing raw material, remaining on the surface of the first lithium composite oxide, are removed through the washing process after (b-1), thereby inducing a smooth reaction between the first lithium composite oxide and the second additive.

Even when (b-1) is further performed, the BET specific surface area of the first lithium composite oxide is preferably 1.5 to 1.8 m²/g.

As the metal element-containing raw material used in (b-1), a M1-containing raw material and/or M2-containing raw material represented by Formula 1 may be used. The raw material may be provided as an oxide or hydroxide containing M1 and/or M2.

M1 and/or M2 may be doped in the crystal lattice of the first lithium composite oxide by the M1-containing raw material and/or M2-containing raw material used in (b-1), or the surface of the first lithium composite oxide may be coated with an oxide containing M1 and/or M2.

The above-described doping and coating with M1 and/or M2 may contribute to an improvement in the thermal stability and storage stability of a positive electrode active material, which is the final product, and an improvement in the electrochemical properties of the positive electrode active material. However, the doping and coating with M1 and/or M2 may increase the BET specific surface area of the first lithium composite oxide as much as a predetermined size, and on the contrary, may also act as a cause of degrading the electrochemical properties and/or stability of the positive electrode active material, which is the final product.

However, according to the present invention, by sufficiently ensuring a doping amount of a specific metal element in the positive electrode active material or a coating amount on the surface of the positive electrode active material and preventing the specific surface area of a lithium composite oxide constituting the positive electrode active material from unnecessarily increasing, even when the positive electrode active material is doped with a specific metal element or a coating layer is introduced on the surface of the positive electrode active material, the degradation in the electrochemical properties and/or stability of the positive electrode active material may be prevented.

Subsequently, in (c), a second mixture is prepared by mixing the material obtained in (b) and a second additive.

The second additive used in (c) may be the same as or different from the first additive. Specifically, the second additive may include at least one selected from Al₂O₃, Al(OH)₃, AlPO₄, Al(PO₃)₃, WO₃, Mg(OH)₂, NH₄F, TiO₂, H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆ and (C₃H₇O₃)B. Preferably, as the second additive, at least one selected from Al₂O₃, Al(OH)₃, H₃BO₃, B₂O₃ and B₂U₅ may be used.

In (c), the second additive is preferably mixed to be 0.1 to 0.5 mol% with respect to the nickel composite precursor. When the second additive is added in an amount less than 0.1 mol% with respect to the nickel composite precursor, the effect of reducing the specific surface area of the second lithium composite oxide obtained in the second thermal treatment in (d) to be described below may be insignificant. In this case, since the specific surface area of the second lithium composite oxide (positive electrode active material), which is the final product, is excessively large, there is a risk of degrading the stability of the positive electrode active material.

On the other hand, when the second additive is added in an amount exceeding 0.5 mol% based on the nickel composite precursor, there is a risk of excessively degrading the specific surface area of the second lithium composite oxide obtained in the second thermal treatment in (d) to be described below. In this case, it is difficult to sufficiently improve the electrochemical properties of the second lithium composite oxide (positive electrode active material), which is the final product.

Subsequently, in (d), a second lithium composite oxide (positive electrode active material), which is the final product, is obtained through the second thermal treatment of the second mixture prepared in (c).

The second thermal treatment in (d) may be performed for 5 to 10 hours by increasing the temperature until 200 to 500 °C at 2 °C per minute while maintaining an O₂ atmosphere in a calcination furnace. When the temperature of the second thermal treatment is less than 200 °C, the effect of reducing the specific surface area of the second lithium composite oxide may be insignificant. On the other hand, when the temperature of the second thermal treatment exceeds 500 °C, rather, the stability of the positive electrode active material, which is the final product, may be degraded by increasing the specific surface area of the second lithium composite oxide.

Accordingly, the BET specific surface area of the second lithium composite oxide obtained in (d) may be 0.8 to 1.2 m²/g. Here, a ratio (s3/s2) of the BET specific surface area (s3) of the second lithium composite oxide to the BET specific surface area (s2) of the first lithium composite oxide is preferably 0.4 to 0.8.

When the ratio (s3/s2) of the BET specific surface area (s3) of the second lithium composite oxide to the BET specific surface area (s2) of the first lithium composite oxide is 0.394 or less, since the specific surface area of the second lithium composite oxide, which is the final product, obtained in (d) is excessively small, it is difficult to sufficiently improve the electrochemical properties of the positive electrode active material containing the second lithium composite oxide.

On the other hand, when the ratio (s3/s2) of the BET specific surface area (s3) of the second lithium composite oxide to the BET specific surface area (s2) of the first lithium composite oxide is 0.823 or more, the effect of reducing the specific surface area of the obtained second lithium composite oxide may be insignificant. In this case, since the specific surface area of the second lithium composite oxide (positive electrode active material), which is the final product, is excessively large, there is a risk of degrading the stability of the positive electrode active material.

The second lithium composite oxide prepared according to the above-described series of methods may be represented by Formula 1 below.

[Formula 1] Li_{w}Ni_{1-(x+y+z)}CoₓM1_{y}M2_{z}O₂

(Here,
M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
0.5≤w≤1.5, 0≤x≤0.50, 0<y≤0.20, and 0≤z≤0.20.)

### Positive electrode active material

According to another aspect of the present invention, a positive electrode active material prepared according to the above-described preparation method is provided.

The positive electrode active material is provided as a lithium composite oxide which includes primary particles capable of lithium intercalation/deintercalation and a secondary particle in which the primary particles are aggregated. The lithium composite oxide may be a second lithium composite oxide (hereinafter, referred to as a lithium composite oxide for convenience) prepared according to the above-described preparation method.

Here, the primary particle of the lithium composite oxide refers to one grain (or crystallite), and the secondary particle refers to an aggregate formed by aggregating a plurality of primary particles. The primary particle may have a rod, oval, and/or irregular shape. There may be a pore and/or a grain boundary between the primary particles constituting the secondary particle.

For example, the primary particle may be spaced apart from a neighboring primary particle in the secondary particle to form an internal pore. In addition, the primary particle may be in contact with an internal pore to form a surface present in the secondary particle, without forming a grain boundary by being in contact with a neighboring primary particle. Meanwhile, a surface where the primary particle present at the outermost surface of the secondary particle is exposed to external air forms the surface of the secondary particle.

Here, as the primary particle has an average major axis length in the range of 0.1 to 5 µm, and preferably 0.1 to 2 µm, the optimal density of a positive electrode manufactured using each of positive electrode active materials according to various embodiments of the present invention may be realized. In addition, the average particle diameter of the secondary particle may vary according to the number of the aggregated primary particles, and may be 1 to 30 µm.

In addition, the positive electrode active material may include a coating layer that covers at least a part of the surface(s) of the primary particle (e.g., the interface between the primary particles) and/or the secondary particle formed by aggregating the primary particles.

For example, the coating layer may be present to cover at least a part of an exposed surface of the primary particle. Particularly, the coating layer may be present to cover at least a part of an exposed surface of the primary particle present on the outermost surface of the secondary particle.

Accordingly, the coating layer may be present as a layer that continuously or discontinuously coats the surface(s) of the primary particle and/or the secondary particle formed by aggregating the primary particles. When the coating layer is present discontinuously, it may be present in an island form.

In addition, in some cases, the oxide may be present in at least a portion of the interface between the primary particles and the surface of the secondary particle, and also present in an inner pore formed inside the secondary particle.

The coating layer present as described above may contribute to an improvement in physical and electrochemical properties of the positive electrode active material.

Here, the coating layer may be present as a solid solution that does not form a boundary with the primary particle and/or the secondary particle formed by aggregating the primary particles, but the present invention is not necessarily limited thereto.

A boron (B)-containing oxide may be present in the coating layer. That is, the coating layer may be defined as a region in which a boron-containing oxide is present.

In addition, in another embodiment, at least one oxide represented by Formula 2 below may be further present in the coating layer.

[Formula 2] LiₐM3_{b}O_{c}

(Here, M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd, and Nd, 0≤a≤6, 0≤b≤8, and 2≤c≤13.)

When at least one oxide represented by Formula 2 is further present in the coating layer, the oxide may be an oxide different from a boron-containing oxide.

The oxide represented by Formula 2 may be an oxide in which lithium and an element represented by M3 are complexed, or an M3 oxide, and the oxide may be, for example, LiₐW_{b}O_{c}, LiₐZr_{b}O_{c}, LiₐTi_{b}O_{c}, LiₐNi_{b}O_{c}, LiₐCo_{b}O_{c}, LiₐAl_{b}O_{c}, Co_{b}O_{c}, Al_{b}O_{c}, W_{b}O_{c}, Zr_{b}O_{c} or Ti_{b}O_{c}. The above-described examples are merely listed for convenience to help in understanding, and the oxide defined herein is not limited to the above-described examples.

In another embodiment, the oxide represented by Formula 2 may be an oxide in which lithium and at least two elements represented by M3 are complexed, or an oxide in which lithium and at least two types of elements represented by M3 are complexed. The oxide in which lithium and at least two elements represented by M3 are complexed may be, for example, Liₐ(W/Ti)_{b}O_{c}, Liₐ(W/Zr)_{b}O_{c}, Liₐ(W/Ti/Zr)_{b}O_{c}, or Liₐ(W/Ti/B)_{b}O_{c}, but the present invention is not necessarily limited thereto.

Here, the boron-containing oxide may be a borate-based compound or lithium borate (LBO)-based compound represented by Formula 3 below, or a composite oxide of a compound represented by Formula 3 below and another compound (e.g., an oxide represented by Formula 2).

[Formula 3] LiₐB_{b}M4_{b'}O_{c}

(Here, M4 is at least one selected from Ni, Mn, Co, Fe, Cu, Nb, Mo, Ti, Al, Cr, Zr, Zn, Na, K, Ca, Mg, Pt, Au, P, Eu, Sm, W, Ce, V, Ba, Ta, Sn, Hf, Ce, Gd, and Nd, 0≤a≤6, 0≤b≤8, 0≤b'≤8, and 2≤c≤13.)

Non-limiting examples of the boron-containing oxide include B₂O₃, Li₂O-B₂O₃, Li₃BO₃, Li₂B₄O₇, Li₂B₂O₇, and Li₂B₈O₁₃.

In addition, the coating layer may be formed of a boron-containing oxide and an oxide represented by Formula 2, present in one layer, or in different layers, respectively.

For example, the coating layer may include a first oxide layer containing at least one oxide represented by Formula 2 and a second oxide layer containing a boron-containing oxide.

Here, the first oxide layer may be present to cover at least a part of an exposed surface (i.e., the surface of the secondary particle) of the primary particle present on the outermost surface of the secondary particle. In addition, the second oxide layer may be present to cover at least a part of the exposed surface of the primary particle that is not covered by the first oxide layer and the surface of the first oxide layer.

Particularly, as the second oxide layer is present so as not to entirely cover the exposed surface of the primary particle that is not covered by the first oxide layer and the surface of the first oxide layer, the efficiency of lithium ion conduction may be improved.

As described above, the lithium composite oxide according to the present embodiment may include a coating layer that covers at least a part of the primary particle (e.g., the interface between the primary particles) and/or the surface of the secondary particle formed by aggregating the primary particles, thereby increasing structural stability. In addition, the lithium composite oxide may use a positive electrode active material for a lithium secondary battery, thereby improving lifespan and capacity characteristics.

In addition, the coating layer may reduce residual lithium in the lithium composite oxide and act as a diffusion path of lithium ions, thereby having an effect of improving the efficiency of a lithium secondary battery.

In addition, the oxide may have a concentration gradient that decreases from the surface to the center of the secondary particle. Accordingly, the concentration of the oxide may decrease from the outermost surface of the secondary particle to the center thereof.

As described above, as the oxide has a concentration gradient that decreases from the surface of the secondary particle to the center thereof, residual lithium on the surface of the positive electrode active material may be effectively reduced to prevent a side reaction by unreacted remaining lithium in advance. In addition, it is possible to prevent the crystallinity in the inner region of the surface of the positive electrode active material from being reduced by the oxide. In addition, it is possible to prevent the overall structure of the positive electrode active material from collapsing due to the oxide during the electrochemical reaction.

### Lithium secondary battery

According to another embodiment of the present invention, a positive electrode including a positive electrode current collector and a positive electrode active material layer formed on the positive electrode current collector may be provided. Here, the positive electrode active material layer may include the above-described positive electrode active material prepared by a preparation method according to various embodiments of the present invention as a positive electrode active material.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

In another exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte wettability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multilayered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1: 1 to 1:9, the electrolyte may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same may be provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### (1) Example 1

A spherical Ni_{0.80}Co_{0.12}Mn_{0.08}(OH)₂ hydroxide precursor was synthesized by a coprecipitation method. Specifically, in a 90L reactor, 25 wt% NaOH and 30 wt% NH₄OH were put into a 1.5M composite transition metal sulfate aqueous solution prepared by mixing nickel sulfate, cobalt sulfate, and manganese sulfate in a molar ratio of 80:12:8. The pH in the reactor was maintained at 11.5, the temperature of the reactor was maintained at 60 °C, and N₂, which is an inert gas, was put into the reactor to prevent the oxidation of the prepared precursor. After synthesis and stirring, washing and dehydration were performed using filter press (F/P) equipment, thereby obtaining a Ni_{0.80}Co_{0.12}Mn_{0.08}(OH)₂ hydroxide precursor (nickel composite precursor).

Subsequently, LiOH (Li/(Ni+Co+Mn) mol ratio = 1.01) as a lithium compound and 0.5 mol% of a first additive (H₃BO₃) with respect to the nickel composite precursor were mixed with the nickel composite precursor, and thermally treated for 12 hours by increasing the temperature until 700 °C at 2 °C per minute while maintaining an O₂ atmosphere in the calcination furnace, and disintegrated, thereby obtaining a first lithium composite oxide.

0.15 mol% of Al₂O₃ and 0.3 mol% of TiO₂ with respect to the first lithium composite oxide were mixed with the first lithium composite oxide, and then further thermally treated for 8 hours by increasing the temperature until 680 °C at 2 °C per minute while maintaining an O₂ atmosphere in the calcination furnace.

Subsequently, the first lithium composite oxide was mixed with distilled water and washed for 30 minutes, and the washed first lithium composite oxide was filtered and then dried.

0.15 mol% of a second additive (H₃BO₃) with respect to the first lithium composite oxide was mixed with the dried first lithium composite oxide, and thermally treated for 8 hours by increasing the temperature until 300 °C at 2 °C per minute while maintaining an O₂ atmosphere in the calcination furnace, thereby obtaining a second lithium composite oxide.

### (2) Example 2

A positive electrode active material was prepared in the same manner as in Example 1, except that the first additive (H₃BO₃) was mixed to be 1.0 mol% with respect to the nickel composite precursor.

### (3) Example 3

A positive electrode active material was prepared in the same manner as in Example 1, except that Al₂O₃ was mixed to be 0.5 mol% with respect to the first lithium composite oxide, and the second additive (H₃BO₃) was mixed to be 0.5 mol% with respect to the first lithium composite oxide.

### (4) Example 4

A positive electrode active material was prepared in the same manner as in Example 1, except that TiO₂ was mixed to be 0.5 mol% with respect to the first lithium composite oxide.

### (5) Example 5

A positive electrode active material was prepared in the same manner as in Example 1, except that Al₂O₃ and TiO₂ were mixed with the first lithium composite oxide and then further thermally treating was not performed.

### (6) Comparative Example 1

A positive electrode active material was prepared in the same manner as in Example 1, except that the dried first lithium composite oxide was thermally treated without mixing the second additive (H₃BO₃).

### (7) Comparative Example 2

A positive electrode active material was prepared in the same manner as in Example 1, except that the nickel composite precursor was thermally treated without mixing the first additive (H₃BO₃).

### (8) Comparative Example 3

A positive electrode active material was prepared in the same manner as in Example 1, except that the first additive (H₃BO₃) was mixed to be 1.25 mol% with respect to the nickel composite precursor.

### (9) Comparative Example 4

A positive electrode active material was prepared in the same manner as in Example 1, except that the first additive (H₃BO₃) was mixed to be 0.25 mol% with respect to the nickel composite precursor.

### (10) Comparative Example 5

A positive electrode active material was prepared in the same manner as in Example 1, except that the second additive (H₃BO₃) was mixed to be 1.0 mol% with respect to the first lithium composite oxide.

### (11) Comparative Example 6

A positive electrode active material was prepared in the same manner as in Example 1, except that the second additive (H₃BO₃) was mixed with the dried first lithium composite oxide without separate thermal treatment.

### Preparation Example 2. Manufacture of lithium secondary battery

A positive electrode slurry was prepared by dispersing 92 wt% of each positive electrode active material prepared according to Preparation Example 1, 4 wt% of artificial graphite, 4 wt% of a PVDF binder in 30 g of N-methyl-2 pyrrolidone (NMP). The positive electrode slurry was uniformly applied to an aluminum thin film having a thickness of 15 µm, and vacuum-dried at 135 °C, thereby manufacturing a positive electrode for a lithium secondary battery.

Lithium foil was used as a counter electrode for the positive electrode, and a porous polyethylene film (Celgard 2300, thickness: 25 µm) was used as a separator, and an electrolyte prepared by adding LiPF₆ at 1.15M in a solvent in which ethylene carbonate and ethyl methyl carbonate were mixed in a volume ratio of 3:7 was used, thereby manufacturing a coin cell.

### Experimental Example 1. BET measurement of nickel composite precursor and lithium composite oxide

A nickel composite precursor, a first lithium composite oxide and a second lithium composite oxide were obtained in the process of preparing a positive electrode active material according to Preparation Example 1 to measure their BET specific surface areas. The BET specific surface areas were calculated from a nitrogen gas adsorption amount under a liquid nitrogen temperature (77K) using a gas adsorption method and a specific surface area measurement system (MicrotracBEL, Belsorp-mini II).

The BET specific surface area measurement results are shown in Table 1 below.

**[Table 1]**

| Classification | Specific surface area BET (m²/g) | | | | |
|---|---|---|---|---|---|
| | Nickel composite precursor (s1) | First lithium composite oxide (s2) | Second lithium composite oxide (s3) | s2/s1 | s3/s2 |
| Example 1 | 14.3 | 1.63 | 1.18 | 0.114 | 0.724 |
| Example 2 | 14.1 | 1.78 | 1.2 | 0.126 | 0.674 |
| Example 3 | 14.7 | 1.72 | 1.08 | 0.117 | 0.628 |
| Example 4 | 13.8 | 1.68 | 0.98 | 0.122 | 0.583 |
| Example 5 | 14.4 | 1.65 | 0.92 | 0.115 | 0.558 |
| Comparative Example 1 | 14.1 | 1.62 | 1.42 | 0.115 | 0.877 |
| Comparative Example 2 | 13.8 | 1.32 | 0.68 | 0.096 | 0.515 |
| Comparative Example 3 | 14.5 | 1.98 | 1.63 | 0.137 | 0.823 |
| Comparative Example 4 | 14.8 | 1.45 | 0.78 | 0.098 | 0.538 |
| Comparative Example 5 | 14.3 | 1.65 | 0.65 | 0.115 | 0.394 |
| Comparative Example 6 | 14.3 | 1.63 | 1.38 | 0.114 | 0.847 |

### Experimental Example 2. Evaluation of electrochemical properties of lithium secondary battery

A charging/discharging experiment was performed on the lithium secondary battery (coin cell) manufactured in Preparation Example 2 using an electrochemical analyzer (Toyo, Toscat-3100) at 25 °C in a voltage range of 3.0V to 4.3V at a discharge rate of 0.1C to measure charging and discharging capacities.

In addition, 50 cycles of charging/discharging were performed on the same lithium secondary battery at 25 °C within a driving voltage range of 3.0V to 4.4V under a 1C/1C condition, and the ratio of the discharge capacity at the 50^{th} cycle to the initial capacity (cycle capacity retention) was measured.

The measurement results are shown in Table 2 below.

**[Table 2]**

| Classification | Charge capacity (mAh/g) | Discharge capacity (mAh/g) | Charge/discharge efficiency (%) | Retention@50cy (%) |
|---|---|---|---|---|
| Example 1 | 228.5 | 217.3 | 95.1% | 95.1% |
| Example 2 | 227.8 | 219.5 | 96.4% | 95.8% |
| Example 3 | 227.8 | 214.1 | 94.0% | 94.7% |
| Example 4 | 229.1 | 218.4 | 95.3% | 95.3% |
| Example 5 | 229.3 | 218.2 | 95.2% | 94.5% |
| Comparative Example 1 | 227.0 | 207.7 | 91.5% | 94.5% |
| Comparative Example 2 | 224.6 | 205.8 | 91.6% | 95.0% |
| Comparative Example 3 | 224.8 | 208.2 | 92.6% | 95.2% |
| Comparative Example 4 | 235.4 | 219.0 | 93.0% | 93.2% |
| Comparative Example 5 | 224.9 | 204.9 | 91.1% | 92.8% |
| Comparative Example 6 | 238.7 | 216.1 | 90.5% | 91.5% |

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A method of preparing a positive electrode active material for a lithium secondary battery, comprising:
(a) preparing a first mixture by mixing a nickel composite precursor, a lithium compound and a first additive;
(b) obtaining a first lithium composite oxide through first thermal treatment of the first mixture;
(c) preparing a second mixture by mixing the first lithium composite oxide and a second additive; and
(d) obtaining a second lithium composite oxide through second thermal treatment of the second mixture,
wherein the first additive and the second additive each independently comprise at least one selected from Al₂O₃, Al(OH)₃, AlPO₄, Al(PO₃)₃, WO₃, Mg(OH)₂, NH₄F, TiO₂, H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆, and (C₃H₇O₃)B, and
the temperature for the second thermal treatment is lower than that of the first thermal treatment.

2. The method of claim 1, wherein, in (a), the first additive is mixed to be 0.5 to 1.0 mol% with respect to the nickel composite precursor.

3. The method of claim 1, wherein the BET specific surface area of the first lithium composite oxide obtained in (b) is 1.5 to 1.8 m²/g.

4. The method of claim 1, wherein a ratio (s2/s1) of the BET specific surface area (s2) of the first lithium composite oxide to the BET specific surface area (s1) of the nickel composite precursor is more than 0.098 and less than 0.137.

5. The method of claim 1, wherein the temperature for the first thermal treatment in (b) is 600 to 800 °C.

6. The method of claim 1, wherein the second additive in (c) is mixed to be 0.1 to 0.5 mol% with respect to the first lithium composite oxide.

7. The method of claim 1, wherein, in (c), the second additive comprises at least one selected from Al₂O₃, Al(OH)₃, H₃BO₃, B₂O₃, and B₂O₅.

8. The method of claim 1, wherein the BET specific surface area of the second lithium composite oxide obtained in (d) is 0.8 to 1.2 m²/g.

9. The method of claim 1, wherein a ratio (s3/s2) of the BET specific surface area (s3) of the second lithium composite oxide to the BET specific surface area (s2) of the first lithium composite oxide is more than 0.394 and less than 0.823.

10. The method of claim 1, wherein the temperature for the second thermal treatment in (d) is 200 to 500 °C.

11. The method of claim 1, wherein the second lithium composite oxide is represented by Formula 1 below,
[Formula 1] Li_{w}Ni_{1-(x+y+z)}CoₓM1_{y}M2_{z}O₂
(Here,
M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
0.5≤w≤1.5, 0≤x≤0.50, 0<y≤0.20, and 0≤z≤0.20).

12. The method of claim 11, further comprising: before (c),
mixing at least one selected from a M1-containing raw material and a M2-containing raw material with the first lithium composite oxide, and thermally treating the resulting mixture in a temperature range from 600 to 800 °C.

13. The method of claim 1, further comprising: before (c),
reacting the first lithium composite oxide with a washing solution.

14. A positive electrode comprising the positive electrode active material prepared according to any one of claims 1 to 13.

15. A lithium secondary battery using the positive electrode of claim 14.
